# EUROPÄISCHE PATENTSCHRIFT

(11) **EP 0 644 640 B1**
(45) Veröffentlichungstag und Bekanntmachung des Hinweises auf die Patenterteilung: **05.02.1997**
(21) Anmeldenummer: 94112019.8
(22) Anmeldetag: 02.08.1994
(51) Int. Cl.: H02G 3/04, E04F 19/04, E04F 17/08

(54) **Installationskanal**
Installation raceway
Gaine d'installation

(30) Priorität: 09.09.1993 DE 9313607 U
(43) Veröffentlichungstag der Anmeldung: 22.03.1995
(73) Patentinhaber: REHAU AG + Co, 95111 Rehau (DE)
(72) Erfinder: Peetz, Matthias, D-95111 Rehau (DE)

(56) Entgegenhaltungen:
- DE-A- 2 244 596
- DE-A- 2 911 100
- DE-U- 7 203 150
- GB-A- 2 132 421

## Beschreibung

Die Neuerung betrifft einen Installationskanal zur Verlegung von elektrischen Leitungen mit einem Boden und zwei einstückig mit diesem verbundenen Seitenwänden, wenigstens einer in Kanallängsrichtung angeordneten Trennwand, die am Boden des Installationskanals arretierbar ist, sowie einem Verschlußdeckel.

Aus der DE-OS 21 09 613 ist ein gattungsgemäßer Kabelkanal bekannt. Bei diesem Kabelkanal ragen vom Boden des Unterteils eine oder mehrere parallel zu den Seitenwänden verlaufende Messerleisten ab, die sich nur in den bodennahen Teil des Unterteils hinein erstrecken. Auf eine oder mehrere oder alle dieser Messerleisten ist eine Trennwand aus Kunststoff aufgesteckt. Diese Trennwand besitzt einen unteren, gabelförmigen Halteteil und einen daran anschließenden Wandbereich, der sich bis in die Nähe des Deckels des Kabelkanals erstreckt. Die Messerleiste besitzt bodennah beidseitig eine Verdickung, die einer muffenartigen Erweiterung im gabelförmigen Halteteil der Trennwand entspricht. Mit dieser muffenartigen Erweiterung wird die beidseitige Verdickung der Messerleiste rastend übergriffen und die Trennwand damit am Boden des Kabelkanals festgelegt. Der Montageaufwand eines solchen Systems ist beträchtlich.

Aus dem DE-U 72 03 150 ist ein weiterer Installationskanal mit einem kastenartigen Profil bekannt, dessen eine Längsseite zum Einbringen der zu verlegenden Leitungen offen ausgebildet ist und nachträglich durch einen Deckel verschlossen werden kann. Am Boden dieses Kabelkanals sind abschnittsweise Rückhalteglieder festlegbar, die in sich ständerartig ausgebildet sind. Die Basis dieser Rückhalteglieder bildet eine in 90°-Richtung zum Stamm verlaufende Fußleiste, welche mittels mechanischer Schraubelemente am Boden des Kabelkanals festgelegt werden kann. Hier ist der Montageaufwand noch größer als beim zuvor geschilderten Stand der Technik.

Die Neuerung hat sich demgegenüber die Aufgabe gestellt, ein Trennwandsystem für Installationskanäle anzugeben, welches ohne großen Montageaufwand am Boden des Kabelkanals festlegbar ist. Neuerungsgemäß wird dazu vorgeschlagen, daß in definiertem Abstand voneinander in den Boden aes Installationskanals zum Kanalinneren gerichtete flächige Erhöhungen eingeprägt sind, in welche an der Kanalachse ausgerichtete Langlöcher eingelassen sind, und daß die Trennwand L-förmig gestaltet ist mit einem kürzeren, zum Boden des Installationskanals gerichteten L-Schenkel, in welchem durchgeprägte, nur noch an einer Schmalseite mit dem L-Schenkel einstückig verbundene Befestigungslaschen eingeformt sind, welche in die Langlöcher am Boden des Installationskanals einsetzbar sind und durch Verschieben unter die flächigen Erhöhungen die Trennwand arretieren.

Das neuerungsgemäße Trennwandsystem benötigt lediglich die in entsprechenden Abständen voneinander angeordneten Langlöcher in den flächigen Erhöhungen am Boden des Installationskanals und die in den gleichen Abständen an der Außenseite des kürzeren L-Schenkels ausgeformten Befestigungslaschen. Diese Befestigungslaschen werden in die Langlöcher eingesetzt und danach wird die Trennwand lediglich axial verschoben, so daß die Befestigungslaschen die an die Langlöcher anschließenden Teilbereiche der flächigen Erhöhungen halternd untergreifen. Der Montagevorgang der Trennwand im Installationskanal ist damit abgeschlossen.

Wichtig für den ungestörten Montagevorgang ist, daß die flächigen Erhöhungen am Boden des Installationskanals in ihrer lichten Hintergreifungshöhe wenigstens der Wanddicke der Befestigungslaschen entsprechen. Dadurch ergeben sich bei der Montage der Trennwand auch dann keine Schwierigkeiten, wenn der Installationskanal beispielsweise fest auf einer Unterlage montiert ist. Die Befestigungslaschen haben immer so viel Bewegungsspielraum im Bereich der flächigen Erhöhungen, daß ein Verklemmen vor dem Erreichen des Endsitzes der Trennwand nicht möglich ist.

Für die ungehinderte Montage der Trennwand am Kanalboden ist es ferner zweckmäßig, daß die Befestigungslaschen wenigstens bis zur Wanddicke der flächigen Erhöhungen in den L-Schenkel durchgeprägt sind.

Das neuerungsgemäße Trennwandsystem ermöglicht ein unproblematisches Festlegen der Trennwand am Kanalboden; wobei der Montageaufwand nur noch aus dem Einsetzen der Befestigungslaschen in die Langlöcher und das anschließende Verschieben der Befestigungslaschen unter die zugeordneten Bereiche der flächigen Erhöhungen besteht. Hierbei wird die Trennwand mit den Befestigungslaschen in das Langloch der flächigen Erhöhungen am Boden des Installationskanals eingeführt und je nach Trennwandlage nach rechts oder links verschoben und somit eingerastet. Hierbei hat es sich als ausreichend erwiesen, daß vier Befestigungslaschen pro 2 m Länge des Installationskanals und damit vier flächige Erhöhungen mit den entsprechenden Langlöchern am Boden des Installationskanals eingelassen sind.

Bei breiteren Installationskanälen können zwei oder mehrere Spuren der flächigen Erhöhungen parallel zueinander am Kanalboden angeordnet sein. Das hat den Vorteil, daß bei ungleichem Abstand der Spuren verschieden große Belegungskammern innerhalb des Installationskanals oder - bei Verwendung mehrerer Trennwände - mehrere Kanalkammern nebeneinander im Kanalinneren angeordnet werden können.

In der Zeichnung ist ein Ausführungsbeispiel des neuerungsgemäßen Installationskanals schematisch dargestellt; es zeigt:
Fig.1 die Trennwand in Seitenansicht,
Fig.2 die Trennwand in aufgerastetem Zustand im Inneren des Installationskanals im Schnitt.

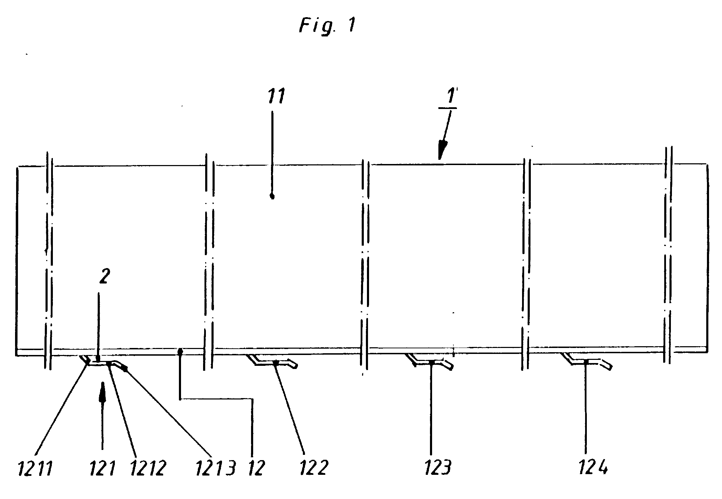

Fig.1 zeigt die Trennwand 1 mit dem langen L-Schenkel 11 und dem kurzen L-Schenkel 12. Aus dem kurzen L-Schenkel 12 sind die Befestigungslaschen 121, 122, 123, 124 mittels Durchprägen ausgeformt. Der Querschnitt der Befestigungslaschen wird am Beispiel der Befestigungslasche 121 wie folgt erläutert:

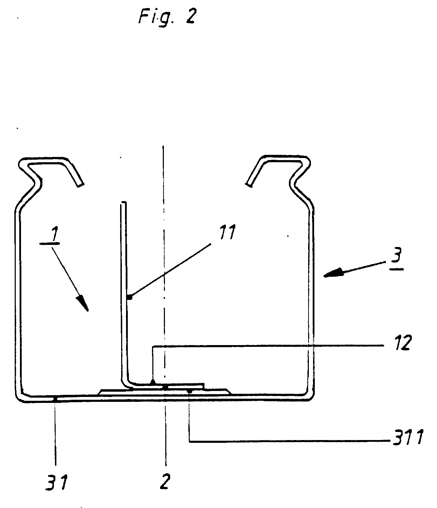

Die Befestigungslasche 121 ist mit ihrer Schmalseite 1211 einstückig mit dem kürzeren L-Schenkel 12 verbunden. Die Schmalseite 1211 ist abgekröpft und bildet mit dem Untergreifungsbereich 1212 der Befestigungslasche 121 einen Aufnahmeraum 2, der wenigstens der Wanddicke der flächigen Erhöhung 311 am Boden 31 des Installationskanals 3 (Fig.2) entspricht. Der Untergreifungsbereich 1212 geht an seinem freien Ende in die nach außen gerichtete Abschrägung 1213 über, die aus Gründen der leichteren Einführbarkeit beim Untergreifen der an die Langlöcher der flächigen Erhöhungen 311 anschließenden Wandbereiche dient.

Fig.2 zeigt die Trennwand 1 mit ihrem langen L-Schenkel 11 und dem kurzen L-Schenkel 12 im inneren des Installationskanals 3. Die Trennwand 1 ist dabei in der bereits beschriebenen Weise auf dem Boden 31 des Installationskanals 3 aufgerastet. Die Befestigungslaschen 121, 122, 123 und 124 wurden zur Herstellung der Rastverbindung über den Langlöchern in den flächigen Erhöhungen 311 am Boden 31 des Installationskanals angeordnet. Die Langlöcher in den flächigen Erhöhungen 311 besitzen eine axiale Ausdehnung, die es erlaubt, die Befestigungslaschen ohne Kippen der Trennwand von oben in die Langlöcher einzusetzen. Danach werden die Befestigungslaschen durch Verschieben der Trennwand unter die zugeordneten Bereiche der flächigen Erhöhungen gebracht und die Trennwand 1 wird auf diese Weise klemmend am Boden 31 des Installationskanals 3 festgelegt.

## Patentansprüche

1. Installationskanal zur Verlegung von elektrischen Leitungen mit einem Boden (31) und zwei einstückig mit diesem verbundenen Seitenwänden sowie wenigstens einer in Kanallängsrichtung angeordneten Trennwand (1), die am Boden des Installationskanals arretierbar ist, sowie einem Verschlußdeckel, dadurch gekennzeichnet, daß in definiertem Abstand voneinander in den Boden (31) des Installationskanals (3) zum Kanalinneren hin gerichtete flächige Erhöhungen (311) eingeprägt sind, in welche an der Kanalachse ausgerichtete Langlöcher eingelassen sind, und daß die Trennwand (1) L-förmig gestaltet ist mit einem kürzeren, zum Boden des Installationskanals (3) gerichteten L-Schenkel (12), in welchem durchgeprägte, nur noch an einer Schmalseite (1211) mit dem L-Schenkel (12) einstückig verbundene Befestigungslaschen (121, 122, 123, 124) ausgeformt sind, welche in die Langlöcher am Boden des Installationskanals (3) einsetzbar sind und durch axiales Verschieben unter die flächigen Erhöhungen (311) die Trennwand arretieren.

2. Installationskanal nach Anspruch 1, dadurch gekennzeichnet, daß die flächigen Erhöhungen (311) am Boden (31) des Installationskanals (3) in ihrer lichten Hintergreifungshöhe wenigstens der Materialdicke der Befestigungslaschen (121, 122, 123, 124) entsprechen.

3. Installationskanal nach Anspruch 1, dadurch gekennzeichnet, daß die Befestigungslaschen (121, 122, 123, 124) wenigstens bis zur Wanddicke der flächigen Erhöhungen (311) in den L-Schenkel (12) durchgeprägt sind.

## Claims

1. Trunking, for the installation of electrical cables, with a base and two side walls attached to the latter in one piece as well as with at least one partition wall arranged along the trunking that can be located in position at the base of the trunking, as well as with a cover, characterised by the fact that embossed in the base (31) of the trunking (3) are flat elevations (311) which face the trunking interior, are spaced apart at a defined distance and feature slots aligned with the trunking axis, and that the partition wall (1) is L-shaped with a shorter L-member (12) facing the base of the trunking (3) in which are stamped fixing lugs (121, 122, 123, 124) attached in one piece to the L-member (12) by only a narrow side (1211), it being possible to insert these lugs into the slots at the base of the trunking (3) and locate the partition wall in position by sliding the lugs beneath the flat elevations (311).

2. Trunking as described in daim 1, characterised by the fact that the dear engagement height of the flat elevations (311) at the base (31) of the trunking (3) at least corresponds to the material thickness of the fixing lugs (121, 122, 123, 124).

3. Trunking as described in daim 1, characterised by the fact that the fixing lugs (121, 122, 123, 124) project through at least as far as the wall thickness of the flat elevations (311) in the L-member (12).

## Revendications

1. Canal d'installation destiné à la pose de conduites électriques présentant un fond et deux parois latérales solidaires de celui-ci en une pièce et au moins une cloison disposée dans le sens longitudinal du canal pouvant être bloquée sur le fond du canal d'installation, ainsi qu'un couverde de fermeture, caractérisé en ce que des bossages plans (311) sont incrustés dans le fond (31) du canal d'installation (3) à une distance définie entre eux et dirigés vers l'intérieur du canal dans lesquels sont percés des trous oblongs le long de l'axe du canal et en ce que la cloison (1) a une forme en L avec une aile en L (12) plus courte dirigée vers le fond du canal d'installation (3) dans laquelle sont formées des colliers de fixation (121, 122, 123, 124) reliés seulement en une pièce par un petit côté (1211) avec l'aile en L (12), ceux-ci pouvant pénétrer dans les trous oblongs du fond du canal d'installation (3) et bloquer la doison par décalage sous les bossages plans (311).

2. Canal d'installation selon la revendication 1, caractérisé en ce que la hauteur libre de prise des bossages plans (311) sur le fond ( 31) du canal d'installation (3) est au moins égale à l'épaisseur de matière des colliers de fixation (121, 122, 123, 124).

3. Canal d'installation selon la revendication 1, caractérisé en ce que les colliers de fixation (121, 122, 123, 124) sont incrustés dans l'aile en L (12) au moins jusqu'à l'épaisseur de paroi des bossages plans (311).
